# NEUE EUROPÄISCHE PATENTSCHRIFT

(11) **EP 2 687 746 B2**
(45) Veröffentlichungstag und Bekanntmachung des Hinweises auf die Entscheidung über den Einspruch: **30.06.2021**
(45) Hinweis auf die Patenterteilung: 12.11.2014
(21) Anmeldenummer: 13174538.2
(22) Anmeldetag: 01.07.2013
(51) Int. Cl.: F16D 66/02

(54) **Halteanordnung für ein Signalkabel einer Bremsbelag-Verschleißsensierung**
Holding assembly for a signal cable of a brake lining wear sensor
Agencement de support pour un câble de signaux d'un système de détection d'usure de garniture de frein

(30) Priorität: 17.07.2012 DE 102012106424
(43) Veröffentlichungstag der Anmeldung: 22.01.2014
(73) Patentinhaber: BPW Bergische Achsen KG, 51674 Wiehl (DE)
(72) Erfinder: Goyke, Georg, 51588 Nümbrecht (DE)
(74) Vertreter: Christophersen & Partner Partnerschaft mbB Patentanwälte

(56) Entgegenhaltungen:
- EP-A2- 0 190 705
- EP-B1- 0 602 866
- DE-A1- 4 340 452
- DE-A1- 10 211 813
- DE-A1- 19 505 318
- DE-A1-102005 060 551
- DE-B3-102011 012 271
- FR-A3- 2 766 299
- US-A- 3 716 113
- US-A- 4 188 613
- US-A- 5 513 726

## Beschreibung

Die Erfindung betrifft eine Halteanordnung für ein Signalkabel einer Bremsbelag-Verschleißsensierung, dessen eines Kabelende mit einem Verschleißsensor, und dessen anderes Kabelende mit einer Mess-, Anzeige- oder Auswerteeinheit verbindbar ist, mit einem zum Umschließen eines Längsabschnitts des Signalkabels ausgebildeten Führungselement.

Eine solche Halteanordnung für das Signalkabel einer Bremsbelag-Verschleißsensierung ist aus der EP 0 602 866 B1 für den Einsatz bei einer Scheibenbremse bekannt. Die zu beiden Seiten der Bremsscheibe angeordneten Bremsbeläge sind jeweils mit einem elektrischen Verschleißsensor versehen, mittels dessen dem Fahrer ein zu weit fortgeschrittener Verschleiß des jeweiligen Bremsbelags angezeigt werden kann. Zur Sensierung des fahrzeugaußen angeordneten Bremsbelages ist es erforderlich, das Signalkabel des Verschleißsensors quer über den Belagschacht der Scheibenbremse, welcher die beiden Bremsbeläge aufnimmt, zu führen. Dort ist das Signalkabel hohen Belastungen ausgesetzt, und zwar sowohl durch die von der Bremsscheibe und den Bremsbelägen abstrahlende Bremswärme, als auch durch einen möglichen Kontakt mit der sich drehenden Bremsscheibe oder der Radfelge. Daher ist zum Schutz des Signalkabels dieses in einer Röhre geführt, die sich quer über den Belagschacht erstreckt. Um ein Austreten aus der nicht vollständig geschlossenen Röhre zu vermeiden, wird diese entweder an mehreren Stellen mit zusätzlichen, die Röhre umschließenden Haltern versehen, oder das Signalkabel wird zunächst mit einer Hülse umgeben, die dann ihrerseits in der Röhre angeordnet und darin mittels Klemmlaschen gesichert wird. Die beiden Enden der Röhre werden dann in geeigneter Weise an dem Bremssattel verankert.

Die Halteanordnung nach der EP 0 602 866 B1 ermöglicht zwar eine geschützte Unterbringung des Signalkabels, sie ist jedoch baulich aufwendig gestaltet unter Verwendung teils speziell gestalteter Einzelteile, die einem Stanz- und einem Biegeprozess unterzogen werden müssen, was die Herstellkosten der Halteanordnung verteuert.

Der Erfindung liegt daher die **Aufgabe** zugrunde, die Halteanordnung einfacher und preiswerter herstellbar zu gestalten.

Zur Lösung wird eine Halteanordnung nach Anspruch 1 vorgeschlagen.

Eine solche Halteranordnung setzt sich aus sehr einfachen oder preiswert herstellbaren Bauteilen zusammen, nämlich einem in eine geeignete Form gebogenen Draht sowie zwei Führungselementen, welche jeweils einen Kanal zur Aufnahme und Hindurchführung sowohl des Haltedrahts, als auch des Signalkabels zur Verfügung stellen. Erzielt wird eine Aufgabenteilung, indem der Haltedraht eine Stützfunktion übernimmt einschließlich der Eigenschaft, eine über den Belagschacht des Bremssattels führende Brücke zu bilden, hingegen die Führungselemente das Signalkabel an die so geschaffene Brücke binden, indem sie zugleich das Signalkabel und den Haltedraht umschließen. Erfolgt dieses Umschließen in Gestalt einer Hülse, übernimmt diese zugleich eine Hitzeschutzfunktion, indem die von den Bremsbelägen und der Bremsscheibe abstrahlende Hitze nicht unmittelbar auf das Signalkabel einwirken kann.

Alle Bauteile, aus denen die Halteanordnung zusammengesetzt ist, sind von besonders einfacher Art. Der Haltedraht ist vorzugsweise ein Metalldraht von einheitlicher Dicke, der durch geeignete Längsbiegeprozesse seine Gestalt erhält. Das Führungselement ist vorzugsweise eine Hülse aus Metall, und daher ebenfalls ein besonders einfaches Bauteil, bei dem zudem auch die Möglichkeit einer Herstellung aus einem flexiblen und hitzebeständigen Material besteht. Die Hülse kann z. B. ein über seinen Umfang geschlossenes Röhrchen sein. Ebenso geeignet ist eine längsgeschlitzte Hülse, solange der Schlitz so schmal ist, dass es zu keinem seitlichen Austreten des Signalkabels oder des Haltedrahts kommen kann.

Zur bremsenfesten Montierbarkeit des Haltedrahts ist dieser mit einem Befestigungsabschnitt versehen. An diesen Befestigungsabschnitt schließt sich ein langgestreckter Halteabschnitt an, wobei das vorzugsweise hülsenförmige Führungselement den Haltedraht nur auf diesem Halteabschnitt umschließt, und nicht auf dem Befestigungsabschnitt.

Vorzugsweise erstreckt sich der Haltedraht, dem Befestigungsabschnitt abgewandt, bis zu einem frei auslaufenden Drahtende. Gemäß einer Ausgestaltung ragt das frei auslaufende Drahtende aus dem umschließenden Führungselement hinaus, und ist in eine an dem Bremssattel vorhandene Ausnehmung oder Öffnung einsteckbar.

Mit einer Ausgestaltung wird vorgeschlagen, dass der Befestigungsabschnitt als federnd aufweitbarer Längsabschnitt des Haltedrahts ausgebildet ist, und damit als einstückiger Bestandteil des Haltedrahts selbst. Dies eröffnet die Möglichkeit, den Befestigungsabschnitt des Haltedrahts als auf ein zylindrisches Bauteil aufklipsbar auszubilden. Dieses zylindrische Bauteil kann z. B. ein Bolzen sein, welcher einen die Bremsbeläge radial beaufschlagenden Niederhalter an dem Bremssattel fixiert.

Weiterhin wird vorgeschlagen, dass der Befestigungsabschnitt des Haltedrahts als ein eine Öffnung freilassendes Ringsegment des Haltedrahts ausgebildet ist, wobei das Ringsegment einen Umschlingungswinkel aufweist, der größer als 180° und nicht größer als 300° ist, und der sich daher durch kurzzeitiges Aufweiten auf dem zylindrischen Bauteil formschlüssig bzw. zusätzlich kraftschlüssig befestigen lässt.

Erfindungsgemäß ist der Haltedraht zweischenklig, wobei die zwei Schenkel von unterschiedlicher Länge sind und sich auf jedem Schenkel ein Führungselement befindet. Hierbei übernimmt der eine, längere Schenkel das Halten des Signalkabels zum äußeren Bremsbelag, und der andere, kürzere Schenkel das Halten des Signalkabels zum inneren Bremsbelag. Bei einer Ausgestaltung sind auch die beiden Führungselemente von unterschiedlicher Länge, wobei sich das längere Führungselement auf dem längeren Schenkel, und das kürzere Führungselement auf dem kürzeren Schenkel befindet.

Weitere Einzelheiten und Vorteile ergeben sich aus der nachfolgenden Beschreibung eines auf der Zeichnung dargestellten Ausführungsbeispiels. Es zeigen:
- Fig. 1: eine perspektivische Draufsicht auf den zentralen Teil des Bremssattels einer Fahrzeug-Scheibenbremse einschließlich des im Bremssattel ausgebildeten Belagschachts mit beidseitig einer Bremsscheibe angeordneten Bremsbelägen;
- Fig. 2: in perspektivischer Darstellung ein zweiarmiges Signalkabel einer Bremsbelag-Verschleißsensierung einschließlich der Bestandteile einer Halteanordnung für das Signalkabel;

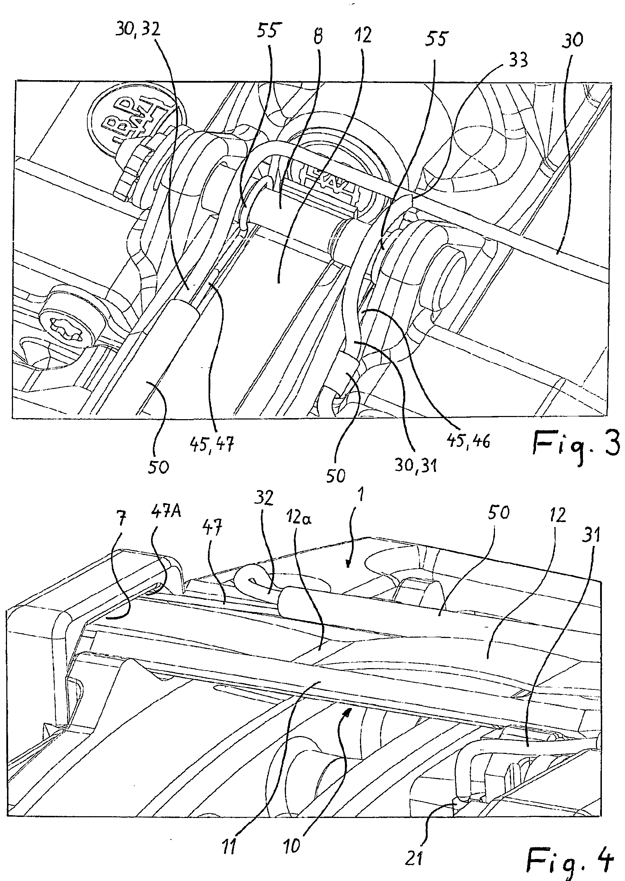

- Fig. 3: eine perspektivische Draufsicht auf jenen Bereich des Bremssattels, an dem das eine Ende der Halteanordnung befestigt ist und
- Fig. 4: eine perspektivische Draufsicht auf jenen Bereich des Bremssattels, an dem das andere Ende der Halteanordnung befestigt ist.

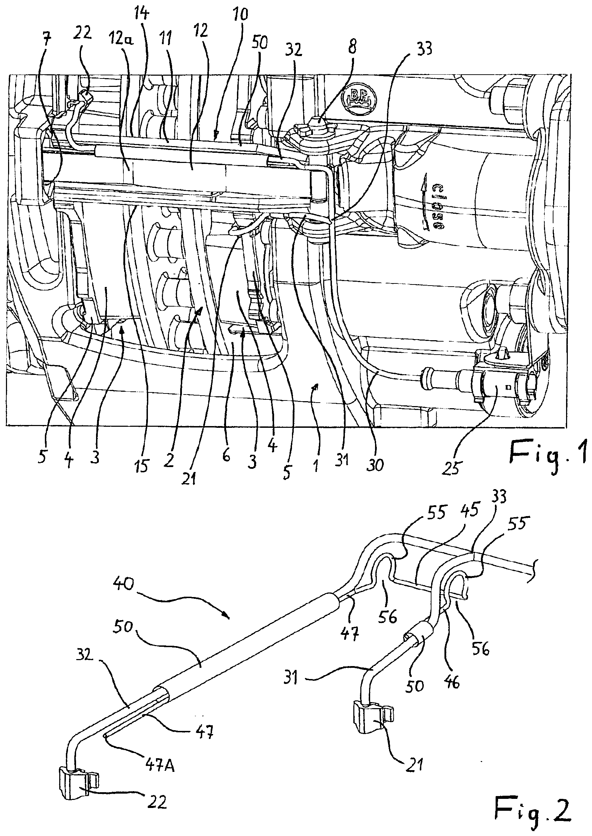

Die Fig. 1 zeigt den zentralen Teil des Bremssattels 1 einer Fahrzeug-Scheibenbremse für Nutzfahrzeuge. Die Scheibenbremse kann vom Gleitsattel-Bautyp oder vom Festsattel-Bautyp sein. Zu beiden Seiten der Bremsscheibe 2 sind Bremsbeläge 3 in dem Bremssattel 1 angeordnet. Zur Aufnahme der Bremsbeläge 3 ist der Bremssattel 1 mit einem Belagschacht 6 versehen, über den sich ein Niederhalter 10 erstreckt. Im Betriebszustand der Scheibenbremse überbrückt der Niederhalter 10 den Belagschacht 6.

Die Bremsbeläge 3 bestehen in üblicher Weise aus dem eigentlichen Reibbelag 4 sowie einer die Führung und Abstützung der Bremsbeläge im Belagschacht 6 übernehmenden Belagrückenplatte 5. Zwischen den Bremsbelägen befindet sich die Bremsscheibe 2 der Scheibenbremse.

Der länglich gestaltete Niederhalter 10 erstreckt sich parallel zur Drehachse der Bremsscheibe 2 und damit zugleich rechtwinklig zu den Bremsbelägen 3. Beide Enden des Niederhalters 10 sind mittelbar oder unmittelbar am Bremssattel 1 der Scheibenbremse befestigbar. Zu diesem Zweck ragt das in Fig. 1 links dargestellte eine Ende des Niederhalters 10 in eine Ausnehmung der Öffnung 7 des Bremssattels 1 hinein. Das andere, in Fig. 1 rechts dargestellte Ende des Niederhalters 10 ist mittels eines Bolzens 8 lösbar am Bremssattel festgelegt.

Zur Sicherung der zwei Bremsbeläge 3 im Belagschacht besteht der Niederhalter 10 aus einem starren Haltebügel 11 und einer biegeelastischen Blattfeder 12. Der Haltebügel 11 weist einen Querschnitt mit einer den Bremsbelägen 3 zugewandten Unterseite auf, an die sich zu beiden Längsrändern 14, 15 hin Schrägen anschließen, wodurch der Haltebügel 11 einen in etwa trapezförmigen Querschnitt zeigt.

Den Bremsbelägen 3 abgewandt weist der Haltebügel 11 eine Außenseite mit einer in etwa trapezförmigen Rinne auf. Mit seinen zwei Schrägen stützt er sich von außen auf den entsprechend gestalteten Rändern der Belagrückenplatten 5 ab, und hält auf diese Weise die Bremsbeläge 3 in dem Belagschacht 6, so dass die Bremsbeläge 3 nicht nach radial außen, bezogen auf die Drehachse der Bremsscheibe, aus dem Belagschacht 6 heraustreten oder herausfallen können.

Die vorzugsweise aus Federstahl bestehende Blattfeder 12 ist über ihre Länge partiell gebogen. Auch sie ist mit ihren beiden Enden lösbar am Bremssattel festgelegt. Sie erstreckt sich längs des starren Haltebügels 11 und ist von außen gegen den Haltebügel 11 abgestützt. Die Abstützung ist dergestalt, dass sich die Blattfeder 12 nicht auf ihrer ganzen Länge, sondern nur auf der vergleichsweise kurzen Länge eines gebogenen Längsabschnitts 12a am ebenen Boden der Rinne des Haltebügels 11 abstützt, und daher auch nur an diesem Ort den Haltebügel mit einer Federkraft in Richtung auf die Bremsbeläge 3 beaufschlagt. Auf diese Weise stützt sich der Haltebügel 11 des Niederhalters 10, obwohl selbst starr, federnd gegen beide Belagrückenplatten 5 ab.

Zur Detektion des im Fahrbetrieb zunehmenden Verschleißes der Reibbeläge 4 ist der fahrzeuginnen angeordnete Bremsbelag 3 (in Fig. 1 rechts) mit einem Verschleißsensor 21, und der im Fahrbetrieb fahrzeugaußen angeordnete Bremsbelag 3 (in Fig. 1 links) mit einem Verschleißsensor 22 versehen. Üblicherweise sind solche Verschleißsensoren 21, 22 in der jeweiligen Belagrückenplatte 5 verankert, und sie ragen mit ihrem Sensorelement in den Dickenbereich des Reibbelags 4.

Das elektrische Signal der Verschleißsensoren 21, 22 gelangt zu einer auf der Zeichnung nicht dargestellten Mess-, Anzeige- oder Auswerteeinheit. So kann z. B. dem Fahrer des Fahrzeugs ein zu stark abgenutzter Reibbelag durch eine entsprechende, in der Auswerteeinheit generierte Mitteilung angezeigt werden.

Für den entsprechenden Signalweg führt ein Signalkabel 30 von den Verschleißsensoren 21, 22 zu einem außen an dem Bremssattel 1 befestigten Kontaktstecker 25, welcher seinerseits mit der Mess-, Anzeige- oder Auswerteeinheit verbindbar ist.

Das Signalkabel 30 setzt sich hier aus zwei Kabelarmen 31, 32 zusammen, die nur auf einem Teil der Kabellänge gemeinsam geführt sind, hingegen auf dem übrigen Teil der Kabellänge als getrennte Kabelarme 31, 32, wobei der Kabelarm 32 deutlich länger als der Kabelarm 31 ist. Die Verzweigung 33 der beiden Kabelarme 31, 32 befindet sich, wie Fig. 1 erkennen lässt, im Bereich des Bolzens 8, welcher das fahrzeuginnere Ende des Niederhalters 10 an dem Bremssattel 1 verriegelt.

Der längere Kabelarm 32 des Signalkabels 30 erstreckt sich quer über den Belagschacht 6 und längs des Niederhalters 10. Zur Positionierung dieses Kabelarms 32, aber auch des kürzeren Kabelarms 31, ist eine in Fig. 2 näher wiedergegebene Halteanordnung 40 vorgesehen. Deren Bestandteile sind ein Haltedraht 45 und ein einen langgestreckten Halteabschnitt des Haltedrahts 45 umschließendes Führungselement 50 in Gestalt eines Röhrchens oder einer Hülse.

Die Hülse 50 kann aus Metall bestehen oder einem festen Kunststoff. Die Hülse 50 kann auch aus einem flexiblen Werkstoff bestehen. In diesem Fall übernimmt allein der Haltedraht 45 die Führungsfunktion hinsichtlich Lage und Ausrichtung der insoweit instabilen Hülse 50 und damit auch der Lage und Ausrichtung des hindurchführenden Signalkabelabschnitts.

Gemäß Fig. 2 ist der Haltedraht 45 durch entsprechende Biegeprozesse zweischenklig ausgebildet, wobei der sich längs des zweiten Kabelarms 31 erstreckende zweite Schenkel 46 kürzer ist, als der sich längs des Kabelarms 32 erstreckende Schenkel 47. Die Hülse 50, welche im Falle des Kabelarms 32 länger ist, als im Falle des Kabelarms 31, umschließt sowohl den jeweiligen Arm 31, 32 des Signalkabels 30, als auch den jeweiligen Halteabschnitt 47, 46 des Haltedrahts 45.

Eine Längsverbindung zwischen der jeweiligen Hülse 50 und dem Haltedraht 45 ist nicht erforderlich. Bevorzugt wird vielmehr, dass Hülse 50 und Haltedraht 45 frei längsbeweglich zueinander angeordnet sind. Auf diese Weise ist die Hülse 50 vom freien Ende des Schenkels 47, 46 auf diesen aufschiebbar.

Der kürzere zweite Schenkel 46 des Haltedrahts ist von solcher Länge und Ausrichtung, dass er, teils umschlossen durch die Hülse 50, den kürzeren Kabelarm 31 führt, wobei für das Signalkabel genügend Flexibilität für die Bewegung des mit dem Verschleißsensor 21 versehenen, inneren Bremsbelags 3 während der Zustellung der Scheibenbremse verbleibt.

Die Hülse 50 auf dem kürzeren Schenkel 46 kann, sofern sie aus einem flexiblem Material besteht, bis zum Sensor 21 reichen und sich an diesem abstützen. Dies vermeidet ihr Abrutschen von dem relativ kurzen Schenkel 46 mit zunehmendem Verschleiß am fahrzeuginneren Bremsbelag 3. Ausreichend ist, wenn der Schenkel 46 zumindest länger ist, als die mit der Zeit verschleißende Dicke der Reibbeläge 4.

Der Schenkel 47 ist von solcher Länge und Ausrichtung, dass sich sein frei auslaufendes Drahtende 47A aus dem umschließenden Führungselement 50 hinaus erstreckt und in die an der Bremse vorhandene Ausnehmung 7 einsteckbar ist, in der auch das Ende des Niederhalters 10 sitzt.

Zur bremsenfesten Montierbarkeit des Haltedrahts 45 weist dieser einen Befestigungsabschnitt 55 auf. Dieser setzt sich aus zwei federnd aufweitbaren Abschnitten des Haltedrahts 45 zusammen. Durch Aufweiten dieser Abschnitte lässt sich der Haltedraht 45 auf der Bremse bzw. hier auf dem zylindrisch gestalteten Bolzen 8 der Bremse aufklipsen.

Um dem Haltedraht die entsprechende Federelastizität zu verleihen, besteht der Befestigungsabschnitt 55 aus zwei Ringsegmenten des Haltedrahts, die zueinander beabstandet und zueinander fluchtend ausgebildet sind. Jedes Ringsegment hat unter Freilassung einer Öffnung 56 einen Umschlingungswinkel, der größer als 180° ist und andererseits 300° nicht übersteigen sollte. Zur bremsfesten Montage der Halteanordnung 40 werden die Ringsegmente des Befestigungsabschnitts 55 kurz aufgeweitet und mit der Öffnung 56 zuerst von der Seite her auf den Bolzen 8 aufgesetzt, um so den Haltedraht 45 auf dem Bolzen 8 zu verklipsen.

An den Befestigungsabschnitt 55 schließt sich der von dem Führungselement 50, also der Hülse, umgebene, langgestreckte Halteabschnitt 47 an. Dieser Halteabschnitt erstreckt sich bei montierter Halteanordnung längs des Niederhalters 10, wobei das frei auslaufende Drahtende 47A in der Ausnehmung 7 verriegelt ist.

Für eine ausreichende Führung des Signalkabels hat die auf dem Halteabschnitt 47 angeordnete Hülse 50 vorzugsweise eine Länge von mindestens 50% der Länge des Haltedrahts 45, gemessen zwischen dem Befestigungsabschnitt 55 und dem Drahtende 47A.

### Bezugszeichenliste

- 1: Bremssattel
- 2: Bremsscheibe
- 3: Bremsbelag
- 4: Reibbelag
- 5: Belagrückenplatte
- 6: Belagschacht
- 7: Ausnehmung
- 8: Bolzen
- 10: Niederhalter
- 11: Haltebügel
- 12: Blattfeder
- 12a: gebogener Längsabschnitt der Blattfeder
- 14: Längsrand
- 15: Längsrand
- 21: Verschleißsensor
- 22: Verschleißsensor
- 25: Kontaktstecker
- 30: Signalkabel
- 31: Kabelarm
- 32: Kabelarm
- 33: Verzweigung
- 40: Halteanordnung
- 45: Haltedraht
- 46: kurzer Schenkel, Halteabschnitt
- 47: langer Schenkel, Halteabschnitt
- 47A: Drahtende
- 50: Führungselement, Hülse
- 55: Befestigungsabschnitt
- 56: Öffnung

## Patentansprüche

1. Halteanordnung für ein Signalkabel einer Bremsbelag-Verschleißsensierung, dessen eines Kabelende mit einem Verschleißsensor, und dessen anderes Kabelende mit einer Mess-, Anzeige- oder Auswerteeinheit verbindbar ist, mit einem zum Umschließen eines Längsabschnitts des Signalkabels ausgebildeten Führungselement (50), **dadurch gekennzeichnet, dass** Bestandteil der Halteanordnung ein bremsenfest montierbarer Haltedraht (45) ist, und dass das Führungselement (50) neben dem Signalkabel auch einen Längsabschnitt des bremsenfest montierbaren Haltedrahts (45) umschließt, und dass der Haltedraht (45) zweischenklig ist, wobei die zwei Schenkel (46, 47) von unterschiedlicher Lange sind und sich auf jedem Schenkel ein Führungselement (50) befindet.

2. Halteanordnung nach Anspruch 1, **dadurch gekennzeichnet, dass** das Führungselement (50) als Hülse ausgebildet ist.

3. Halteanordnung nach Anspruch 2, **dadurch gekennzeichnet, dass** die Hülse aus einem flexiblen und hitzebeständigen Material besteht.

4. Halteanordnung nach einem der Ansprüche 1 - 3, **dadurch gekennzeichnet, dass** Führungselement (50) und Haltedraht (45) längsbeweglich zueinander angeordnet sind.

5. Halteanordnung nach einem der vorangehenden Ansprüche, **dadurch gekennzeichnet, dass** das Führungselement (50) das Signalkabel und den Längsabschnitt des Haltedrahts (45) parallel zueinander umschließt.

6. Halteanordnung nach einem der vorangehenden Ansprüche, **dadurch gekennzeichnet, dass** zur bremsenfesten Montierbarkeit des Haltedrahts (45) dieser mit einem Befestigungsabschnitt (55) versehen ist.

7. Halteanordnung nach Anspruch 6, **dadurch gekennzeichnet, dass** der Haltedraht (45) im Anschluss an den Befestigungsabschnitt (55) mit einem langgestreckten Halteabschnitt (47) versehen ist, und dass das Führungselement (50) den Haltedraht (45) nur auf dem Halteabschnitt (47) umschließt.

8. Halteanordnung nach Anspruch 6 oder 7, **dadurch gekennzeichnet, dass** sich der Haltedraht (45), dem Befestigungsabschnitt (55) abgewandt, bis zu einem frei auslaufenden Drahtende (47A) erstreckt.

9. Halteanordnung nach Anspruch 8, **dadurch gekennzeichnet, dass** sich das frei auslaufende Drahtende (47A) aus dem umschließenden Führungselement (50) hinaus erstreckt und in eine an der Bremse vorhandene Ausnehmung oder Öffnung (7) einsteckbar ist.

10. Halteanordnung nach einem der Ansprüche 6 - 9, **dadurch gekennzeichnet, dass** der Befestigungsabschnitt (55) als federnd aufweitbarer Längsabschnitt des Haltedrahts (45) ausgebildet ist.

11. Halteanordnung nach Anspruch 10, **dadurch gekennzeichnet, dass** der Befestigungsabschnitt (55) als auf ein zylindrisches Bauteil, vorzugsweise einen Bolzen (8), der Bremse aufklipsbar ausgebildet ist.

12. Halteanordnung nach Anspruch 11, **dadurch gekennzeichnet, dass** der Befestigungsabschnitt (55) des Haltedrahts (45) als ein eine Öffnung (56) freilassendes Ringsegment mit einem Umschlingungswinkel ausgebildet ist, der größer als 180° und nicht größer als 300° ist.

13. Halteanordnung nach Anspruch 1, **dadurch gekennzeichnet, dass** die Führungselemente (50) von unterschiedlicher Lange sind, wobei sich das längere Führungselement auf dem längeren Schenkel (47), und das kürzere Führungselement auf dem kürzeren Schenkel (46) befindet.

14. Halteanordnung nach Anspruch 13, **dadurch gekennzeichnet, dass** sich das Ende (47A) des längeren Schenkels (47) aus dem diesen umschließenden Führungselement (50) hinaus erstreckt, und in eine an der Bremse vorhandene Ausnehmung oder Offnung (7) einsteckbar ist.

## Claims

1. A holding arrangement for a signal cable of a brake-lining wear sensing means, one end of the cable being capable of being connected to a wear sensor and the other end of the cable being capable of being connected to a measurement, display or evaluation unit, with a guide element (50) designed to enclose a longitudinal portion of the signal cable, **characterized in that** the holding arrangement comprises a holding wire (45) capable of being mounted in a manner fixed with respect to the brake, and **in that** as well as the signal cable the guide element (50) also encloses a longitudinal portion of the holding wire (45) capable of being mounted in a manner fixed with respect to the brake, and **in that** the holding wire (45) is formed with two legs, wherein the two legs (46, 47) are of different length, and a guide element (50) is provided on each leg.

2. A holding arrangement according to Claim 1, **characterized in that** the guide element (50) is designed in the form of a sleeve.

3. A holding arrangement according to Claim 2, **characterized in that** the sleeve consists of a flexible and heat-resistant material.

4. A holding arrangement according to any one of Claims 1 to 3, **characterized in that** the guide element (50) and the holding wire (45) are arranged so as to be movable longitudinally with respect to each other.

5. A holding arrangement according to any one of the preceding Claims, **characterized in that** the guide element (50) encloses the signal cable and the longitudinal portion of the holding wire (45) parallel to each other.

6. A holding arrangement according to any one of the preceding Claims, **characterized in that** the holding wire (45) is provided with a fastening portion (55) in order that the aforesaid holding wire (45) may be capable of being mounted in a manner fixed with respect to the brake.

7. A holding arrangement according to Claim 6, **characterized in that** following the fastening portion (55) the holding wire (45) is provided with an elongate holding portion (47), and the guide element (50) encloses the holding wire (45) only on the holding portion (47).

8. A holding arrangement according to Claim 6 or 7, **characterized in that** the holding wire (45) extends, facing away from the fastening portion (55), as far as an end (47A) of the wire freely running out.

9. A holding arrangement according to Claim 8, **characterized in that** the end (47A) of the wire freely running out extends out of the enclosing guide element (50) and is capable of being inserted into a recess or opening (7) present on the brake.

10. A holding arrangement according to any one of Claims 6 to 9, **characterized in that** the fastening portion (55) is designed in the form of a longitudinal portion of the holding wire (45) capable of being widened in a resilient manner.

11. A holding arrangement according to Claim 10, **characterized in that** the fastening portion (55) is designed so as to be capable of being clipped onto a cylindrical component, preferably a pin (8), of the brake.

12. A holding arrangement according to Claim 11, **characterized in that** the fastening portion (55) of the holding wire (45) is designed in the form of an annular segment leaving free an opening (56) and with a wrapping angle which is larger than 180 ° and not larger than 300 °.

13. A holding arrangement according to Claim 1, **characterized in that** the guide elements (50) are of different length, wherein the longer guide element is situated on the longer leg (47) and the shorter guide element is situated on the shorter leg (46).

14. A holding arrangement according to Claim 13, **characterized in that** the end (47A) of the longer leg (47) extends out of the guide element (50) enclosing the latter and is capable of being inserted into a recess or opening (7) present in the brake.

## Revendications

1. Dispositif de maintien pour un câble de signal d'un système de détection d'usure de garniture de frein, dont une extrémité de câble peut être reliée à un capteur d'usure et dont l'autre extrémité de câble peut être reliée à une unité de mesure, d'affichage ou d'analyse, avec un élément de guidage (50) conçu pour entourer une portion longitudinale du câble de signal, **caractérisé en ce qu'**un fil de maintien (45) pouvant être monté de manière fixe sur le frein fait partie du dispositif de maintien, et **en ce que** l'élément de guidage (50) entoure également, en plus du câble de signal, une portion longitudinale du fil de maintien (45) pouvant être monté de manière fixe sur le frein, et **en ce que** le fil de maintien (45) présente deux branches, ces deux branches (46, 47) étant de longueurs différentes et un élément de guidage (50) se trouvant sur chaque branche.

2. Dispositif de maintien selon la revendication 1, **caractérisé en ce que** l'élément de guidage (50) est conçu comme une gaine.

3. Dispositif de maintien selon la revendication 2, **caractérisé en ce que** la gaine est constituée d'un matériau flexible et résistant à la chaleur.

4. Dispositif de maintien selon l'une des revendications 1 à 3, **caractérisé en ce que** l'élément de guidage (50) et le fil de maintien (45) sont disposés de façon à être mobile longitudinalement l'un par rapport à l'autre.

5. Dispositif de maintien selon l'une des revendications précédentes, **caractérisé en ce que** l'élément de guidage (50) entoure le câble de signal et la portion longitudinale du fil de maintien (45) parallèlement entre eux.

6. Dispositif de maintien selon l'une des revendications précédentes, **caractérisé en ce que,** pour monter le fil de maintien (45) de manière fixe sur le frein, celui-ci est muni d'une portion de fixation (55).

7. Dispositif de maintien selon la revendication 6, **caractérisé en ce que** le fil de maintien (45) est muni, dans le prolongement de la portion de fixation (55), d'une portion de maintien (47) allongée et **en ce que** l'élément de guidage (50) entoure le fil de maintien (45) seulement au niveau de la portion de maintien (47).

8. Dispositif de maintien selon la revendication 6 ou 7, **caractérisé en ce que** le fil de maintien (45) s'étend à l'opposé de la portion de fixation (55), jusqu'à une extrémité de fil (47A) sortant librement.

9. Dispositif de maintien selon la revendication 8, **caractérisé en ce que** l'extrémité de fil (47A) sortant librement s'étend hors de l'élément de guidage (50) qui l'entoure et peut être insérée dans un évidement ou une ouverture (7) prévu(e) sur le frein.

10. Dispositif de maintien selon l'une des revendications 6 à 9, **caractérisé en ce que** la portion de fixation (55) est conçue comme une portion longitudinale du fil de maintien (45) s'élargissant de manière élastique.

11. Dispositif de maintien selon la revendication 10, **caractérisé en ce que** la portion de fixation (55) est conçue de façon à pouvoir être clipsée sur un composant cylindrique, de préférence une tige (8), du frein.

12. Dispositif de maintien selon la revendication 11, **caractérisé en ce que** la portion de fixation (55) du fil de maintien (45) est conçue comme un segment annulaire laissant libre une ouverture (56), avec un angle d'enroulement supérieur à 180° et inférieur à 300°.

13. Dispositif de maintien selon la revendication 1, **caractérisé en ce que** les éléments de guidage (50) sont de longueurs différentes, l'élément de guidage le plus long se trouvant sur la branche la plus longue (47) et l'élément de guidage le plus court se trouvant sur la branche la plus courte (46).

14. Dispositif de maintien selon la revendication 13, **caractérisé en ce que** l'extrémité (47A) de la branche la plus longue (47) s'étend hors de l'élément de guidage (50) qui l'entoure et peut être insérée dans un évidement ou une ouverture (7) prévu(e) sur le frein.
